# EUROPÄISCHE PATENTSCHRIFT

(11) **EP 1 480 016 B1**
(45) Veröffentlichungstag und Bekanntmachung des Hinweises auf die Patenterteilung: **17.09.2008**
(21) Anmeldenummer: 03011738.6
(22) Anmeldetag: 23.05.2003
(51) Int. Cl.: G01D 5/347

(54) **Verfahren zur Justierung von optischen Geberelementen**
Method for adjusting optical encoders
Procédé d'ajustement des encodeurs optiques

(43) Veröffentlichungstag der Anmeldung: 24.11.2004
(73) Patentinhaber: PWB-Ruhlatec Industrieprodukte GmbH, 99846 Seebach (DE)
(72) Erfinder: Braun, Paul Wilhem, 53842 Troisdorf (DE)
(74) Vertreter: Müller-Wolff, Thomas

(56) Entgegenhaltungen:
- US-A- 4 972 599
- PATENT ABSTRACTS OF JAPAN vol. 009, no. 046 (M-360), 27. Februar 1985 (1985-02-27) -& JP 59 185876 A (MITSUBISHI DENKI KK), 22. Oktober 1984 (1984-10-22)

## Beschreibung

Die Erfindung betrifft ein Verfahren zur Zentrierung von optischen Geberelementen in Form von Taktscheiben auf Antriebswellen, wobei die Geberelemente randseitig in den Sensor-Bereich einer Vorrichtung zur Bewegungssteuerung eingreifen und wobei die Zentrierung über einen Ausschnitt im optischen Geberelement zweistufig erfolgt. Die Erfindung betrifft ferner ein optisches Geberelement in Form einer Tektscheibe gemäβ Anspruch 2.

An optische Geberelemente der eingangs genannten Art werden hohe Anforderungen hinsichtlich der Genauigkeit der Positionierung und der Auflösungsqualität sowie der Funktionsgenauigkeit bei schwankenden Temperatur-, Druck- und Feuchtigkeitsverhältnissen gestellt. Da es sich um Großserienteile handelt, werden fertigungsgerechte Konstruktionen verlangt, die mit möglichst einfachen, störungsunanfälligen und möglichst wenigen Bauteilen auskommen. Mit anderen Worten: Die Justierung soll schnell und zuverlässig und unter allen Bedingungen präzisionsgenau selbst unter erschwerten Einbaubedingungen zustande kommen. Außerdem soll eine automatisierte Fertigung ermöglicht werden, die eine hohe Prozesssicherheit garantiert.

Taktscheiben sind in der Regel auf einer rotierenden Achse mittels Nabe befestigt. Dabei werden sowohl lichtdurchlässige als auch reflektierende Taktscheiben verwendet. Bei der lichtdurchlässigen Taktscheibe erzeugt der im Emitter ausgesendete Lichtstrahl im Durchlichtverfahren bei der Rotation der Scheibe Impulse, die auf der gegenüberliegenden Seite der Taktscheibe von einem Sensorelement empfangen werden. Bei der reflektierenden Taktscheibe liegen Sensor und Emitterelemente auf einer Seite der Taktscheibe, üblicherweise parallel zur Rotationsachse, so dass auf engstem Raume eine Abtastung der Taktscheibe bzw. Taktlineale erfolgen kann.

Nähere Einzelheiten hierzu werden in dem Gebrauchsmuster DE 29504883 U1 und in der DE 10016959.7 (Anmelder: PWB-Ruhlatec Industrieprodukte GmbH) beschrieben. Zur Vereinfachung der Justierung von optischen Geberelementen können diese in einer Baueinheit zusammengefasst werden wie beispielsweise in der Gebrauchsmusterschrift DE 20120932 U1 (Anmelder: PWB-Ruhlatec Industrieprodukte GmbH) dargestellt. Dort wird in Fig. 1 eine Sensor-Emittereinheit 9 in U-Form auf eine Leiterplatte 5 aufgesetzt, die an der Unterseite des Motors 1 befestigt ist. Die auf dem Wellenende 2 eines Elektromotors 1 aufgesetzte Taktscheibe greift mit ihrem Randbereich in den Zwischenraum der U-förmig ausgebildeten Sensoremittereinheit 9 ein. Hierdurch entstehen bei der Montage folgende Probleme:

Aus der JP 59185876 ist bekannt, eine Taktscheibe mit Langloch über das freigelegte Ende einer Welle oder eines Schaftes auf eine Auflagefläche aufzulegen und in den Bereich eines Sensors einzuschieben. Die Taktscheibe wird dabei mit Bezug auf die Achse des Schaftes über zusätzliche Schlitze und Führungs-Bohrlöcher ausgerichtet. In der zentrierten Position fixiert kann die Taktscheibe mit einer Abdeckscheibe und einer Schraube abschließend befestigt werden. Dann kann eine Gehäuseoberseite auf das optische Geberelement wieder autgeschraubt werden.

Die Präzision des optischen Geberelementes hängt im wesentlichen von der Positionsgenauigkeit der Taktscheibe auf der Antriebswelle und der Lage der Sensor-Emittereinheit auf der Leiterplatte ab. Auf der Leiterplatte sind verschiedene Lötverbindungen herzustellen. Durch die dabei auftretenden Temperaturen wird die Beschaffenheit und Positionsgenauigkeit der im Temperatureinflussbereich liegenden Materialien beeinträchtigt. Außerdem lässt sich eine Automatisierung der Fertigung nur in einem sehr aufwendigen Verfahren durchführen, bei dem die Prozesssicherheit durch eine Vielzahl von Fertigungsschritten in Frage gestellt ist.

Aufgabe der vorliegenden Erfindung ist es daher, ein Verfahren und ein zur Durchführung des Verfahrens geeignetes optisches Geberelement zu entwickeln, mit dem eine Zentrierung der Taktscheiben bzw. Taktlineale auf Antriebswellen, Werkzeugund/oder Steuerschlitten sowie auf vertikal oder horizontal beweglichen Positionsgebern mit hoher Genauigkeit ermöglicht wird. Das neue Verfahren und das neue optische Geberelement sollen eine automatisierte Großserienfertigung mit geringster Ausschussrate (Fehlerquote gegen 0) und eine Anwendung auf kleinste Teilabmessungen in technisch leicht realisierbarer Form möglich machen.

Diese Aufgabe wird erfindungsgemäß durch die in den Patentansprüchen angegebenen Merkmale gelöst. Es hat sich gezeigt, dass bei der erfindungsgemäßen Ausgestaltung der optischen Geberelemente die Zentrierung in einem zweistufigen Montagevorgang mit hoher Präzision durchgeführt werden kann. Mit dem neuen Verfahren und dem neuen Geberelement ist gewährleistet, dass ein schädlicher Einfluss durch die beim Lötprozess auftretenden Temperaturen mit Sicherheit vermieden werden können. Durch die geraden Vorschubbewegungen lässt sich die Prozesssicherheit vergrößern und erstmals eine Automatisierung mit geringem Fertigungsaufwand erreichen.

Im folgenden wird die Erfindung anhand mehrerer Ausführungsbeispiele näher erläutert. Es zeigen:
- Fig. 1: Gesamtansicht einer Vorrichtung zur Bewegungssteuerung im montierten Zustand
- Fig. 2: Optisches Geberelement mit Langlochausschnitt
- Fig. 3: Optisches Geberelement mit Formloch-Ausschnitt

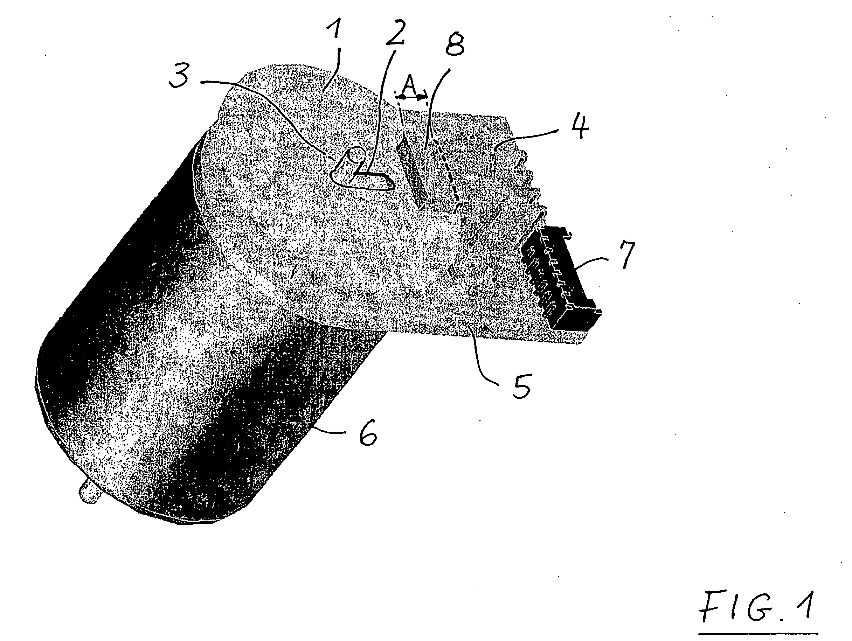

In Fig. 1 ist ein optisches Geberelement 1 mit einer Öffnung 2 für die Befestigung auf einer Antriebswelle 3 dargestellt. Seitlich vom Geberelement 1 befindet sich eine Sensoremittereinheit 4, die auf einer Leiterplatte 5 befestigt ist. Die Leiterplatte 5 wiederum sitzt auf der Flanschseite eines Elektromotors 6, der über gelötete Anschlüsse (nicht dargestellt) mit einem Steckverbinder 7 in Kontakt steht.

Die Zentrierung der als optisches Geberelement verwendeten Taktscheibe erfolgt auf der Welle 3 in Bezug auf die Sensor-Emittereinheit 4. Die Zentrierung ist so vorzunehmen, dass in einem Sensorbereich 8 der Sensor-Emittereinheit 4 absolut konstante Messbedingungen herrschen, so dass die auf der Taktscheibe angeordneten Code-Marken beim Durchlaufen des Sensorbereichs 8 keine Impulsschwankungen erzeugen.

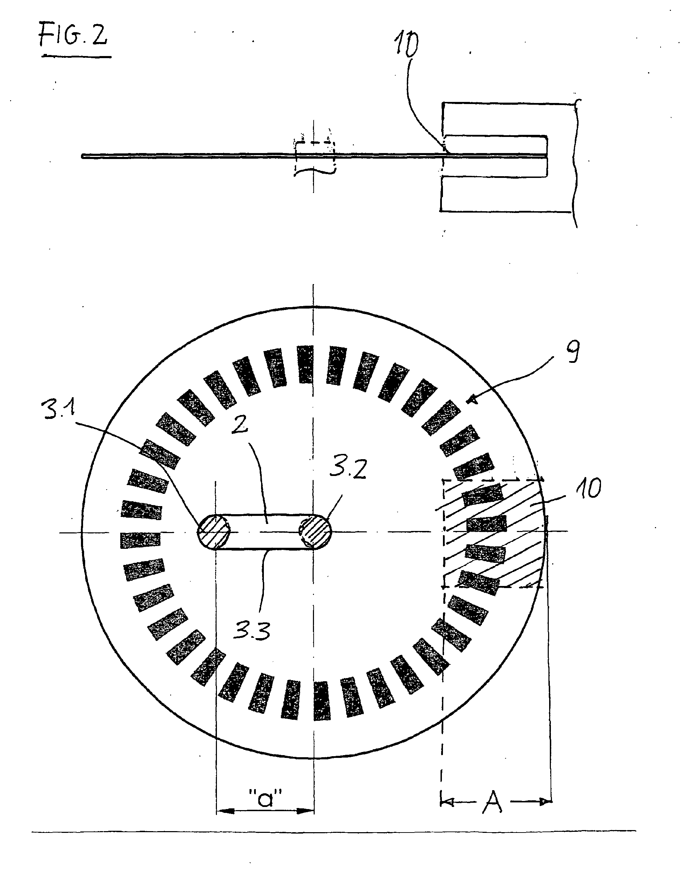

Die in Fig. 2 in Draufsicht dargestellte Taktscheibe zeigt in Umfangsrichtung mit konstantem Abstand umlaufende Code-Marken 9, die mit einer Genauigkeit von < 1/1.000.000 m auf photooptischem Wege aufgebracht wurden.

In Fig. 2 ist ferner eine Abtastzone - hier als "Sensorprojektionsfläche" 10 bezeichnet mit der Breite A dargestellt, die mit dem Sensorbereich 8 gemäß Fig. 1 deckungsgleich ist. In dieser Zone wird das vom Emitterbereich ausgehende Lichtsignal in elektrische Impulse umgewandelt.

Im linken Bereich der Taktscheibe gemäß Fig. 2 befindet sich eine Langloch-Öffnung 2 für die Aufnahme der Motorwelle 3. Die von der Motorwelle einzunehmenden Extrempositionen weisen einen Montageabschnitt 3.1 und einen Zentrierabschnitt 3.2 auf. Die Länge des dazwischenliegenden Transferabschnittes 3.3 ist mit a bezeichnet und entspricht der Breite A des Bereiches der Sensorprojektionsfläche 10.

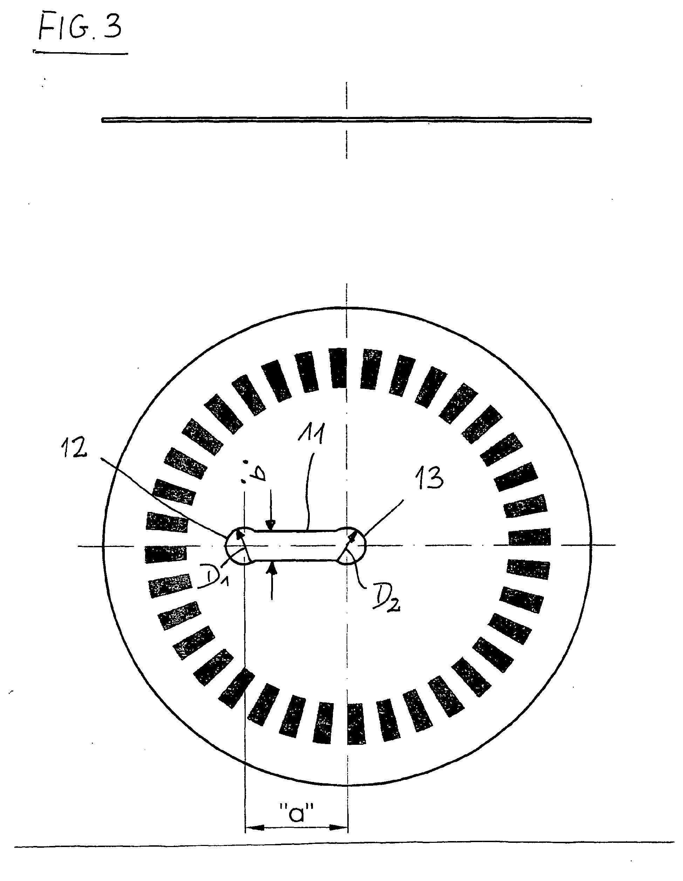

Fig. 3 zeigt analog zu Fig. 2 eine Taktscheibe in Draufsicht, wobei hier die Öffnung 2 als hantelförmig ausgebildetes Formloch 11 dargestellt ist. Diese Ausführung sorgt für eine optimale Zentrierung des neuen optischen Geberelementes und sichert gleichzeitig das Erreichen der Endpositionen durch eine "Rastfunktion". Die Rastfunktion wird dadurch erreicht, dass der Transferbereich zwischen dem Montageabschnitt 12 und dem Zentrierabschnitt 13 eine geringere Breite b aufweist als die Durchmesser D1, D2 in den Montage- bzw. Zentrierabschnitten.

Die in den Fig. 1 bis 3 dargestellten Ausführungsbeispiele zeigen einen einfachen Aufbau. Die Vorschubbewegung der Taktscheibe aus der Montageposition in die Justierposition ist geradlinig, so dass eine automatische Fertigung einfach zu realisieren ist. Die in den Beispielen gezeigten Fertigungsabläufe können leicht optimiert werden, wobei eine hohe Prozesssicherheit in allen Fällen gewährleistet ist.

## Patentansprüche

1. Verfahren zur Zentrierung von optischen Geberelementen in Form von Taktscheiben auf Antriebswellen, wobei die Geberelemente randseitig in den Sensorbereich einer Vorrichtung zur Bewegungssteuerung eingreifen und wobei die Zentrierung über einen Ausschnitt im optischen Geberelement zweistufig erfolgt, **dadurch gekennzeichnet, dass** die Zentrierung des optischen Geberelements über eine zweistufige Rastfunktion über den Ausschnitt zusammengesetzt aus einem Montageabschnitt, einem Zentrierabschnitt im Kreismittelpunkt des Geberelementes und einem Transferabschnitt erfolgt, wobei das optische Geberelement in der ersten Stufe außerhalb des Sensorbereichs im Montageabschnitt, aufweisend einen Durchmesser D1, vorjustiert wird und in der zweiten Stufe durch seitliches Verschieben über Führungsflächen des Transferabschnittes in den Sensorbereich hinein im Zentrierabschnitt, aufweisend einen Durchmesser D2, feinjustiert wird, wobei der Transferabschnitt eine im Vergleich zu den Durchmessern D1 und D2 geringere Öffnungsweite b aufweist.

2. Optisches Geberelement in Form einer Taktscheibe (1) mit einer Öffnung (2) für die Befestigung auf Antriebswellen (3), wobei die Taktscheibe randseitig angebrachte über ein Lichtsignal in einer Sensor-Emittereinheit (4) in elektrische Impulse umwandelbare Code-Marken aufweist, und wobei die Taktscheibe dazu ausgelegt ist, dass sie im montierten Zustand randseitig in den Sensorbereich (8), aufweisend eine Breite A, der Sensor-Emittereinheit eingreift, wobei die Öffnung der Taktscheibe aus einem Montageabschnitt, aufweisend einen Durchmesser D1, einem Zentrierabschnitt, aufweisend einen Durchmesser D2, und einem zwischen Montage- und Zentrierabschnitt liegenden Transferabschnitt der Länge a und der Breite b besteht, wobei die Länge a des Transferabschnittes gleich oder größer als die vom Sensorbereich überdeckte Breite A ist, **dadurch gekennzeichnet, dass** die Durchmesser D1 und D2 von Montage- und Zentrierabschnitt größer als die Breite b des Transferabschnittes sind.

3. Optisches Geberelement nach Anspruch 2, **dadurch gekennzeichnet, dass** die Öffnung, bestehend aus Zentrierabschnltt (3.2), Transferabschnitt und Montageabschnitt (3.1.), hantelförmig ausgebildet ist.

## Claims

1. A method of centring optical transmitter elements in the form of encoder discs on driveshafts, wherein the transmitter elements edgeways engage the sensor region of a device for controlling the movement and wherein centring takes place in two stages via a cut-out in the optical transmitter element,
**characterised in**
**that** the process of centring the optical transmitter element takes place via a two-stage engagement function via the cut-out composed of an assembly portion, a centring portion in the centre of a circle of the transmitter element and a transfer portion, wherein the optical transmitter element is preadjusted in the first stage outside the sensor region in the assembly portion, comprising a diameter D1, and is precision-adjusted in the second stage by a lateral displacement via guiding faces of the transfer portion into the sensor region in the centring portion, comprising a diameter D2, wherein the transfer portion comprises an aperture width b which is smaller than the diameters D1 and D2.

2. An optical transmitter element in the form of an encoder disc (1) with an aperture (2) for fixing the latter on driveshafts (3), wherein the encoder disc comprises code marks which are applied to its edge and which can be converted into electrical pulses via a light signal in a sensor-emitter unit (4) and wherein the encoder disc is designed in such a way that, in the assembled condition, it engages edgeways the sensor region (8) with a width A of the sensor-emitter unit, wherein the aperture of the encoder disc consists of an assembly portion with a diameter D1, a centring portion with a diameter D2 and a transfer portion positioned between the assembly portion and the centring portion and having the length **a** and the width **b**, wherein the length **a** of the transfer portion is equal to or greater than the width A covered by the sensor region,
**characterised in**
**that** the diameters D1 and D2 of the assembly portion and of the centring portion are greater than the width **b** of the transfer portion.

3. An optical transmitter element according to claim 2,
**characterised in**
**that** the aperture consisting of the centring portion (3.2), the transfer portion and the assembly portion (3.1) is cylindrical.

## Revendications

1. Un procédé de centrage d'encodeurs optiques en forme de disques de codage destinés au montage sur des arbres d'entraînement, selon lequel les encodeurs avancent avec le bord dans la zone détectrice d'un équipement de contrôle des mouvements, et selon lequel le centrage est réalisé en deux étapes par le secteur de l'encodeur optique, **caractérisé par le fait que** le centrage de l'encodeur optique est réalisé par une fonction d'arrêt à crans en deux étapes par le secteur composé d'une zone de montage, d'une zone de centrage au centre du cercle de l'encodeur et d'une zone de transfert, l'encodeur optique étant ajusté préalablement en première étape dans la zone de montage, en dehors de la zone détectrice et présentant un diamètre D1, et ajusté avec précision dans la seconde étape, par un transfert latéral via les surfaces de guidage de la zone de transfert, en avançant dans la zone détectrice de la zone de centrage, ayant un diamètre D2, la zone de transfert présentant une ouverture b moins large, comparée aux diamètre D1 et D2.

2. Un encodeur optique en forme de disque de codage (1) ayant une ouverture (2) pour la fixation sur un arbre d'entraînement (3), le disque de codage présentant sur le bord des repères de codage qui, par un signal lumineux dans le bloc détecteur (4), peuvent être transformés en impulsions électriques, et le disque de codage dimensionné de manière à avancer avec le bord, en état assemblé, dans la zone détectrice (8) du bloc détecteur, ayant une largeur A, l'ouverture du disque de codage présentant une zone de montage ayant un diamètre D1, une zone de centrage ayant un diamètre D2 et une zone de transfert située entre la zone de montage et la zone de centrage, ayant une longueur a et une largeur b, la longueur a de la zone de transfert étant égale ou plus grande que la largeur A qui est recouverte par la zone détectrice, et **caractérisé par le fait que** les diamètres D1 et D2 des zones de montage et de centrage sont supérieurs à la largeur b de la zone de transfert.

3. Un encodeur optique conformément à la revendication 2, **caractérisé par le fait que** l'ouverture, comprenant la zone de centrage (3.2), la zone de transfert et la zone de montage (3.1) est exécutée en forme de haltère.
